# EUROPÄISCHE PATENTSCHRIFT

(11) **EP 3 273 015 B1**
(45) Veröffentlichungstag und Bekanntmachung des Hinweises auf die Patenterteilung: **26.08.2020**
(21) Anmeldenummer: 17183923.6
(22) Anmeldetag: 20.05.2015
(51) Int. Cl.: F01D 25/28, G01P 21/02, F01D 17/06, F16C 43/00

(54) **KALIBRIERVORRICHTUNG ZUR DURCHFÜHRUNG EINES DEMONTAGEVERFAHRENS FÜR GASTURBINEN**
CALIBRATION DEVICE FOR CARRYING OUT A DISASSEMBLY METHOD FOR GAS TURBINES
DISPOSITIF D'ÉTALONNAGE DESTINÉ À EXÉCUTER UN PROCÉDÉ DE DÉMONTAGE POUR TURBINES À GAZ

(30) Priorität: 30.05.2014 DE 102014210297
(43) Veröffentlichungstag der Anmeldung: 24.01.2018
(62) Teilanmeldung aus: 15723517.7
(73) Patentinhaber: Lufthansa Technik AG, 22335 Hamburg (DE)
(72) Erfinder: ALBERT, Rainer, 22359 Hamburg (DE); PINKOWSKY, Tanja, 22179 Hamburg (DE); MALCHOW, Andina, 25469 Halstenbek (DE); BOBSIEN, Dennis, 25451 Quickborn (DE)
(74) Vertreter: Müller Verweyen

(56) Entgegenhaltungen:
- DE-A1- 19 643 336
- DE-A1-102007 055 239
- US-A1- 2013 199 206
- "Futterrohre - UGA SYSTEM-TECHNIK", , 30. Mai 2013 (2013-05-30), XP055231772, Gefunden im Internet: URL:https://web.archive.org/web/2013053010 5427/http://www.uga.eu/de/produkte/futterr ohre/fu/ [gefunden am 2015-11-26]

## Beschreibung

Die Erfindung betrifft eine Kalibriervorrichtung zur Durchführung eines Demontageverfahrens für Gasturbinen mit den Merkmalen des Oberbegriffs von Anspruch 1.

Bei aus dem Stand der Technik bekannten Gasturbinen, insbesondere bei Gasturbinen für Flugzeuge, nachfolgend Triebwerk genannt, handelt es sich um sogenannte Zweiwellentriebwerke. Ein Beispiel für Zweiwellentriebwerke sind die Triebwerke vom Typ V2500-A5 von International Aero Engines (IAE). Eine innere N1 (Niederdruck) Welle dient hier zur Übertragung eines Drehmoments zwischen der Niederdruckturbine und dem Niederdruckverdichter; eine die N1 Welle koaxial umgebende N2 (Hochdruck) Welle überträgt das Drehmoment von einer Hochdruckturbine zu einem Hochdruckverdichter. Im vorderen Bereich des Triebwerks ist die N1 Welle drehfest mit einem Niederdruckverdichter verbunden, wobei die drehfeste Verbindung auch über Zwischenelemente umgesetzt werden kann. Dieser Abschnitt des Niederdrucksystems bildet mit dem Gasturbinengehäuse einen Zwischenraum. Insbesondere der Bereich, in dem der vordere Teil der N1 Welle gegenüber dem Gasturbinengehäuse gelagert ist, ist für Instandhaltungsmaßnahmen nur schwer zugänglich; dieser Bereich wird als vorderer Lagerbereich oder als "Front Bearing Compartment" bzw. "No. 3 Bearing, Internal Gearbox and Support Assemblies" bezeichnet. Durch die im Betrieb auftretenden Verschleißmechanismen müssen die Komponenten im vorderen Lagerbereich bestimmten Instandhaltungsmaßnahmen unterworfen werden. Zu besonders hohen Aufwänden führen Instandhaltungsmaßnahmen, die in schwer zugänglichen Bereichen, wie z.B. dem vorderen Lagerbereich, durchgeführt werden müssen. Bei planmäßigen Instandhaltungsereignissen können diese Maßnahmen während einer Überholung des Triebwerks in einer Werkstatt durchgeführt werden. Treten Probleme an Komponenten, die nur über den vorderen Lagerraum zugänglich sind, unplanmäßig auf, so muss eine aufwendige Demontage von zumindest Teilsystemen der Gasturbine durchgeführt werden, um Zugang zu dem vorderen Lagerbereich zu erlangen. Die damit einhergehenden Konsequenzen sind hohe Arbeitsaufwände, lange Durchlaufzeiten und hohe Folgekosten durch Flugverspätungen und Annullierungen.

Müssen im vorderen Lagerbereich Instandhaltungsmaßnahmen, wie z.B. die Inspektion oder der Wechsel von Komponenten, durchgeführt werden, dann erfolgt dies nach einem bekannten vorgegebenen Ablauf.

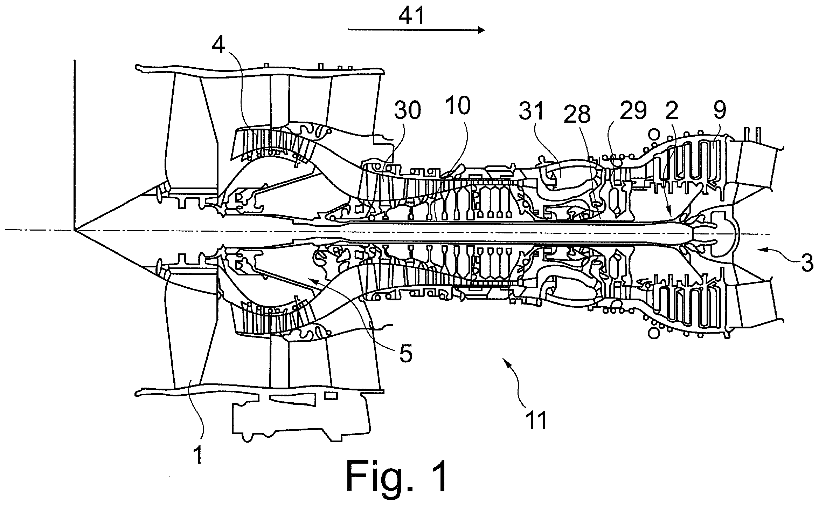

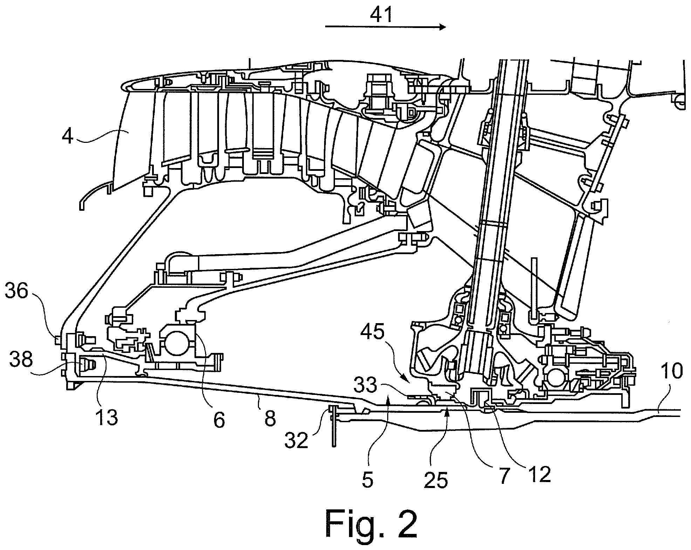

Dieser bekannte Ablauf sieht vor, dass zunächst das Triebwerk vom Flügel des Flugzeugs abgenommen werden muss, um anschließend zu einer Werkstatt transportiert zu werden. Unter Zuhilfenahme der Fig. 1 und Fig. 2 soll das bekannte Verfahren kurz erläutert werden.

In der Werkstatt werden in einem ersten Schritt alle für die weitere Zerlegung notwendigen Anlagen, wie z.B. Rohrleitungen, Kabel und Haltebleche, und Geräte am Kerntriebwerk entfernt. In einem zweiten Schritt wird ein Niederdruckturbinenmodul 2, das sog. "Low Pressure Turbine Module", und ein Abgasgehäuse 3, das sog. "Exhaust Case", demontiert. Das Niederdruckturbinenmodul 2 umfasst dabei die Niederdruckturbine 9 und die N1 Welle 10. In einem dritten Schritt wird anschließend ein Fanmodul 1 entfernt. In einem vierten Schritt wird dann der Niederdruckverdichter 4, der sog. "Low Pressure Compressor", entfernt. Um nun in einem weiteren Schritt den vorderen Lagerbereich 5 für Instandhaltungsmaßnahmen zugänglich zu machen, wird eine erste und zweite Lagereinheit 6 und 7 zusammen mit einer Flanschwelle 8, dem "Low Pressure Stub Shaft", nach vorne aus dem Triebwerk gezogen. Die Trennung der Flanschwelle 8 mit der ersten und zweiten Lagereinheit 6 und 7 von der Gasturbine 11 erfolgt an der Stelle einer hydraulischen Dichtung 12, dem sog. "Hydraulic Seal". Durch Verwendung einer speziell dafür vorgesehenen Vorrichtung wird eine entsprechende Kraft in axialer Richtung aufgebracht, so dass die erste und zweite Lagereinheit 6 und 7 mit der Flanschwelle 8 nach vorne aus der Gasturbine 11 gezogen bzw. geschoben werden können. Die spezielle Vorrichtung macht es zwingend erforderlich, dass die N1 Welle 10 entfernt wird, da die Vorrichtung in den Innenbereich der hydraulischen Dichtung 12 eingreift, die normalerweise über eine Presspassung mit der N1 Welle 10 verbunden ist. Durch dieses bekannte Demontageverfahren erlangt man Zugang zu dem vorderen Lagerbereich 5 und kann dort verschiedene Instandhaltungsmaßnahmen durchführen. Typische Instandhaltungsmaßnahmen, die in diesem Bereich durchgeführt werden, sind z.B. der Wechsel eines Geschwindigkeitssensors, der sog. "Speed Probe", oder eines Positionsgebers, der sog. "Trim Balance Probe", oder des von innen nach außen führenden Kabelbaumes, der sog. "Electrical Harness". Nach der Durchführung der Instandhaltungsmaßnahmen folgt der Montageprozess, der im Wesentlichen dem umgekehrten Demontageprozess entspricht.

Das bis hier beschriebene und aus dem Stand der Technik bekannte Vorgehen ist sehr zeitaufwändig, da alle an der äußeren Gehäusewandung liegenden Geräte, Rohre und Kabel entfernt werden müssen, um das beschriebene Demontageverfahren durchführen zu können. Das Triebwerk muss damit in hohem Maße demontiert werden, um Zugang zu dem vorderen Lagerbereich zu erlangen. Ferner ist es nachteilig, dass es mit dem beschriebenen Verfahren nicht möglich ist, Zugang zum vorderen Lagerbereich bei einem noch an der Tragfläche des Flugzeugs hängenden Triebwerk, also "On-Wing", zu erlangen.

Die Offenlegungsschrift DE 196 43 336 A1 beschreibt ein Verfahren, mit dem ein stirnseitiges Lagergehäuse oder ein Niederdruck-Verdichter-Wellenteil demontiert werden kann, ohne dass das Triebwerk von der Tragfläche abmontiert werden muss. Hierzu wird die N1-Welle des Triebwerks sowohl in Axialrichtung als auch in Rotationsrichtung fixiert. Das stirnseitige Lagergehäuse oder das Niederdruck-Verdichter-Wellenteil wird anschließend an einem Hebewerkzeug befestigt, so dass die ausgebauten Komponenten bei der Bewegung nach vorne aus dem Triebwerk gestützt werden. Die in der DE 196 43 336 A1 vorgeschlagene Hebevorrichtung ist nicht mit der Gasturbine verbunden, sondern wird beispielsweise durch einen Kranhaken in Position gehalten. Nachteilig an dieser Lösung ist, dass eine Stützwirkung nur im vorderen, direkt zugänglichen Bereich des Triebwerks erreicht werden kann, also dort, wo das Hebewerkzeug mit dem Kranhaken verbunden ist. Ein beschädigungsfreier Ausbau von Komponenten des Triebwerks kann damit nur dann erfolgen, wenn diese in einem vorderen Bereich des Triebwerks angeordnet sind, in dem sie während des Demontagevorgangs von der Hebevorrichtung ausreichend gestützt werden können. Ein weiterer Nachteil ist, dass die Hebevorrichtung relativ zum Triebwerk, insbesondere in ihrer Höhe, justiert werden muss, um einen beschädigungsfreien Ein- bzw. Ausbau der Komponenten zu ermöglichen.

Aus der Offenlegungsschrift DE 10 2011 009 770 A1 ist ein Verfahren zum Wechseln einer Dichtungsplatte bzw. einer Lagereineinheit bekannt. Bei diesem Verfahren wird eine Teilmotoreinheit umfassend einen Kernmotor und eine Niederdruckturbine aus dem Triebwerk demontiert. In einem weiteren Schritt kann anschließend die Dichtungsplatte an der Teilmotoreinheit gewechselt werden. Im ausgebauten Zustand der Teilmotoreinheit kann alternativ oder zusätzlich auch eine Lagereinheit, die zur Lagerung der N2 Welle dient, gewechselt werden.

Aus der Offenlegungsschrift DE 10 2007 055 239 A1 ist eine Vorrichtung zur Messung der Rotationsgeschwindigkeit einer im Turbinengehäuse gelagerten Hohlwelle einer Strömungsmaschine bekannt. Diese Messvorrichtung ist insbesondere für Strahltriebwerke mit mindestens einem Sensor aus einem an einem Gehäuse befestigten Messkopf und an einer Hohlwelle angeordneten Verzahnung geeignet. Dabei sind die Verzahnung und der Messkopf an einer Innenseite der Hohlwelle angeordnet.

Zudem sind aus dem Stand der Technik zylindrische Rohrelemente mit zwei zylindrischen Außenflächen und einem dazwischen liegenden, sich über die Außenflächen erstreckenden, Vorsprung bekannt.

Aus der Offenlegungsschrift US 2013/0199206 A1 ist eine Positionierung einer Sensoreinrichtung zur Messung der Rotationsgeschwindigkeit einer Turbine bekannt, bei der eine erste Welle an einer ersten Axialposition mit einer ersten Kompressor-Einheit verbunden ist, die erste Welle an einer zweiten Axialposition mit einer Antriebswelle eines Fanmoduls verbunden ist und eine Sensoreinheit an einer dritten Axialposition, axial vor der ersten Axialposition und axial hinter der zweiten Axialposition.

Der Erfindung liegt die Aufgabe zugrunde, eine Kalibriervorrichtung zur vereinfachten Durchführung eines Demontageverfahrens für Gasturbinen bereitzustellen.

Die Erfindung löst diese Aufgabe mit den Merkmalen von Anspruch 1. Weitere bevorzugte Ausführungsformen der Erfindung sind den Unteransprüchen, den Figuren sowie der dazugehörigen Beschreibung zu entnehmen.

Gemäß dem Grundgedanken der Erfindung wird zur Lösung der Aufgabe eine Kalibriervorrichtung zur Durchführung eines Demontageverfahrens für Gasturbinen vorgeschlagen, wobei die Kalibriervorrichtung eine erste und zweite Außenfläche aufweist, wobei der Radius der ersten Außenfläche dem Radius eines Taktgebers eines Sensorsystems entspricht, und die zweite Außenfläche formkorrespondierend zu der Innenfläche der zweiten Lagereinheit ist. Der Außenradius der ersten Fläche dient damit dazu, die Außenfläche des Taktgebers zu simulieren, um damit den Abstand dieser Fläche zum Sensorkopf messen zu können. Durch die Formkorrespondenz der zweiten Außenfläche zu der Innenfläche der zweiten Lagereinheit kann die Kalibriervorrichtung durch die Anbringung an der zweiten Lagereinheit ausgerichtet werden.

Vorzugsweise weist die Kalibriervorrichtung einen ringförmigen Vorsprung auf, wobei an dem ringförmigen Vorsprung wenigstens eine Aussparung zum vereinfachten Bewegen der Kalibriervorrichtung in die bzw. aus der Kalibrierposition vorgesehen ist. Wegen der eingebauten N1 Welle muss die Kalibriervorrichtung in axialer Richtung über die N1 Welle verschiebbar sein, damit die Kalibriervorrichtung in die Kalibrierposition bewegbar ist. Die Kalibrierposition ist die Position, in der die erste Außenfläche der Kalibriervorrichtung die Position der Außenfläche des eingebauten Taktgebers einnimmt. Die Aussparungen ermöglichen es, die Kalibriervorrichtung an Hindernissen vorbei in die Kalibrierposition zu bewegen. Der Vorsprung erfüllt dabei die Funktion einer Anlagefläche. In der Kalibrierposition liegt der Vorsprung der Kalibriervorrichtung von vorne an der zweiten Lagereinheit an und legt damit die Kalibrierposition in axialer Richtung fest.

Vorzugsweise greift die Kalibriervorrichtung formkorrespondierend in die Innenfläche der zweiten Lagereinheit ein. Die Kalibriervorrichtung wird damit bevorzugt an der zweiten Lagereinheit angeordnet. Die Kalibriervorrichtung kann durch die zweite Lagereinheit so positioniert werden, dass der Außenradius des Taktgebers zuverlässig von einer Außenfläche der Kalibriervorrichtung simuliert werden kann.

Die Erfindung wird im Folgenden anhand bevorzugter Ausführungsformen unter Bezugnahme auf die beigefügten Figuren erläutert. Dabei zeigt:
- Fig. 1: eine schematische Darstellung des Aufbaus eines Flugzeugtriebwerks;
- Fig. 2: eine schematische Darstellung des Aufbaus eines vorderen Teilbereichs eines Flugzeugtriebwerks;
- Fig. 3: eine schematische Darstellung einer Fixiervorrichtung;
- Fig. 4: ein mit einer N1 Welle verbundenes Führungsrohr einer Führungsvorrichtung;
- Fig. 5: eine perspektivische Ansicht einer Haltevorrichtung;
- Fig. 6: eine perspektivische Ansicht eines Führungsrohrs;
- Fig. 7: eine erste Ansicht einer Kalibriervorrichtung; und
- Fig. 8: eine zweite Ansicht einer Kalibriervorrichtung.

In der Fig. 1 ist in einer schematischen Darstellung eine Gasturbine 11 in Form eines Flugzeugtriebwerks gezeigt. Nachfolgend wird daher von einem Triebwerk und einem Triebwerksgehäuse gesprochen. Es handelt sich dabei um ein Zweiwellentriebwerk, wobei eine N1 Welle 10 koaxial von einer N2 Welle 28 umgeben ist. Die N1 Welle 10 überträgt ein Rotationsmoment von einer Niederdruckturbine 9 zu einem Fanmodul 1 und einem Niederdruckverdichter 4. Die N2 Welle 28 überträgt ein Rotationsmoment von einer Hochdruckturbine 29 zu einem Hochdruckverdichter 30 und ist gegenüber einem Triebwerksgehäuse gelagert. Zwischen dem Hochdruckverdichter 30 und der Hochdruckturbine 29 ist eine Brennkammer 31 angeordnet. Die N1 Welle 10 und die Niederdruckturbine 4 bilden dabei ein Niederdruckturbinenmodul 2. Das Triebwerk wird in der Reihenfolge Fanmodul 1, Niederdruckverdichter 4, Hochdruckverdichter 30, Brennkammer 31, Hochdruckturbine 29, Niederdruckturbine 9 von einer Luftmasse durchströmt; dies entspricht der Richtung eines Pfeils 41 in den Fig. 1 bis Fig. 4. Nachfolgend ist mit der Richtungsangabe "nach hinten" eine Bewegung in Richtung des Pfeils 41 gemeint; die Richtungsangabe "nach vorne" beschreibt eine Bewegung entgegen der Richtung des Pfeils 41. Die Angaben "axial" und "radial" beziehen sich auf die Rotationsachse des Triebwerks, also der N1 Welle 10.

In der Fig. 2 ist eine schematische Darstellung des Aufbaus eines vorderen Teilbereichs eines Flugzeugtriebwerks gezeigt. Die N1 Welle 10 ist über eine Presspassung mit einer Flanschwelle 8 drehfest verbunden, wobei die Verbindung zwischen der N1 Welle 10 und der Flanschwelle 8 in axialer Richtung durch eine Verschraubung 32 gesichert ist. Die Verschraubung 32 bildet damit ein aktiv lösbares Verbindungsmittel im Sinne der Erfindung. Die N1 Welle 10 ist in einem Teilbereich koaxial von der Flanschwelle 8 umgeben. Über eine zweite Lagereinheit 7 wird die Flanschwelle 8 und damit auch die N1 Welle 10 gegenüber dem Triebwerksgehäuse gelagert. Im Bereich der zweiten Lagereinheit 7 ist ein Sensorsystem 45 vorgesehen, wobei durch einen Taktgeber 33 in Abhängigkeit der Drehfrequenz der N1 Welle 10 ein Signal erzeugt wird, das über einen Fühlerkopf detektiert wird. In Abhängigkeit des Signals kann so die Drehzahl der N1 Welle 10 gemessen werden. Die Flanschwelle 8 ist wiederum über eine Verbindungswelle 13 mit dem Niederdruckverdichter 4 drehfest verbunden. Die Verbindungswelle 13 ist über eine erste Lagereinheit 6 in dem Triebwerksgehäuse gelagert. Soweit entspricht der Aufbau beispielsweise dem Triebwerkstyp V2500-A5 von IAE.

Nachfolgend wird das Verfahren am Beispiel des Triebwerkstyps V2500-A5 von IAE beschrieben. Es sei jedoch darauf hingewiesen, dass das Verfahren auch bei anderen Triebwerkstypen zum Einsatz kommen kann, darunter fällt beispielsweise der Triebwerkstyp V2500-D5 von IAE. Darüber hinaus ist auch ein Einsatz bei anderen Triebwerkstypen und bei stationären Gasturbinen mit entsprechendem Aufbau möglich.

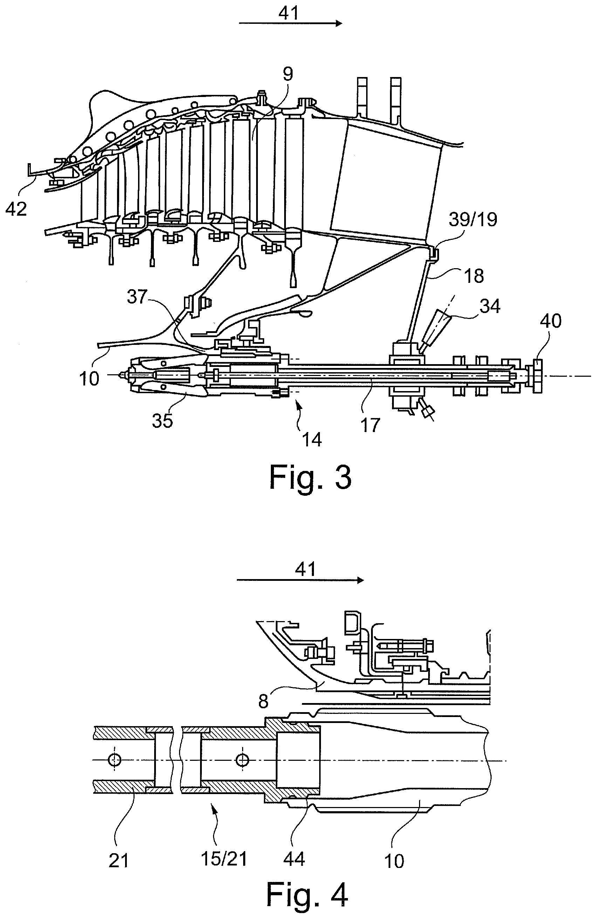

In den Fig. 1 und Fig. 2 ist das Triebwerk in einem montierten und damit einsatzfähigen Zustand gezeigt, während in den Fig. 3 und Fig. 4 die Demontage des Triebwerks in verschiedenen Verfahrensschritten zu erkennen ist. Zur Durchführung des Verfahrens wird in einem ersten Schritt vorzugsweise das Fanmodul 1 demontiert.

In einem zweiten Schritt erfolgt vorzugsweise die Fixierung der Niederdruckturbine 9. Vorzugsweise wird hierzu eine erfindungsgemäße Fixiervorrichtung 14 verwendet, siehe Fig. 3.

Fig. 3 zeigt die Fixiervorrichtung 14 in einer schematischen Darstellung. Die Fixiervorrichtung 14 umfasst eine Fixierstange 17, einen Zentrierteller 18, einen Expander 35, einen Griff 40 und ein Handrad 34. Der Zentrierteller 18 dient dazu, die Fixierstange 17 gegenüber der N1 Welle so auszurichten, dass deren Längsachsen im Wesentlichen deckungsgleich sind. Weiter dient der Zentrierteller 18 dazu, die Fixiervorrichtung 14 in axialer Richtung gegenüber dem Triebwerksgehäuse zu fixieren. Der Griff 40 ist über eine mechanische Wirkverbindung mit dem Expander 35 verbunden, so dass dieser geöffnet und gesperrt werden kann. Der Expander 35 befindet sich in einer gesperrten Stellung, wenn dieser in radialer Richtung erweitert ist; in diesem Zustand kann der Expander 35 eine formschlüssige Verbindung zwischen einem Endabschnitt 37 der N1 Welle 10 und der Fixierstange 17 herstellen. Der Zentrierteller 18 weist wenigstens ein Befestigungsmittel 19 auf, durch das der Zentrierteller 18 mit einem Innenflansch 39 des Abgasgehäuses 3 verbindbar ist. Vorzugsweise ist an der Fläche des Zentriertellers 18, die im montierten Zustand an dem Innenflansch 39 anliegt, eine Teflonschicht vorgesehen. Damit kann eine Beschädigung des Innenflansches 39 vermieden werden; alternativ können jedoch auch andere Schutzschichtarten verwendet werden. Über das Handrad 34 kann die Fixierstange 17 in axialer Richtung relativ zu dem Zentrierteller 18 bewegt werden und somit die N1 Welle 10 fixiert werden.

In dem zweiten Schritt des Demontageverfahrens wird zunächst der Abgaskonus vom Innenflansch 39 des Abgaskonus demontiert, wodurch die N1 Welle 10 im hinteren Triebwerksbereich zugänglich gemacht wird. Durch Betätigung des Griffs 40 wird der Expander 35 in die geöffnete Stellung gebracht, so dass dieser in den Endabschnitt 37 der N1 Welle 10 bewegbar ist. Durch das Befestigungsmittel 19 an dem Zentrierteller 18 wird die Fixiervorrichtung 14 in radialer und axialer Richtung gegenüber dem Triebwerksgehäuse fixiert. Anschließend wird der Griff 40 betätigt und somit der Expander 35 in die gesperrte Stellung gebracht, in der die Fixierstange 17 formschlüssig so mit der N1 Welle 10 verbunden ist, dass eine Axialbewegung der N1 Welle 10 verhindert wird. Über eine Drehbewegung des Handrads 34 wird nun die Fixierstange 17 in axialer Richtung nach hinten bewegt, so dass die N1 Welle 10 über die Fixiervorrichtung 14 mit dem Triebwerksgehäuse so verspannt ist, dass im vorderen Bereich des Triebwerks die weiteren Demontageschritte vorgenommen werden können. Die N1 Welle 10 ist in diesem Zustand in axialer Richtung fixiert.

In einem dritten Schritt des Verfahrens kann nun vorzugsweise entweder die Flanschwelle 8 und/oder der Niederdruckverdichter 4 demontiert werden. Nachfolgend wird beispielhaft die Alternative beschrieben, bei der die Flanschwelle 8 und der Niederdruckverdichter 4 demontiert werden.

Vorzugsweise wird zunächst der Niederdruckverdichter 4 demontiert, wobei hierzu eine Verbindung 36 zwischen der Verbindungswelle 13 und dem Niederdruckverdichter 4 gelöst wird. Darauf folgt die Demontage der Flanschwelle 8, die nach vorne aus dem Triebwerk gezogen wird, wobei das Niederdruckturbinenmodul 2 eingebaut bleibt; ein Verbindungsflansch 42 des Niederdruckturbinengehäuses muss damit nicht gelöst werden. Die Verbindung 38 zwischen der Verbindungswelle 13 und der Flanschwelle 8 wurde bereits bei der Demontage des Fanmoduls 1 gelöst; die Verbindung 38 bildet dabei ein aktiv lösbares Verbindungsmittel im Sinne der Verbindung. Die Flanschwelle 8 und die Verbindungswelle 13 sind somit in diesem Verfahrensschritt nur noch über eine Presspassung miteinander verbunden. Die Verbindungswelle 13 verbleibt dabei im Triebwerk und wird von der ersten Lagereinheit 6 gehalten; der Ausbau der Verbindungswelle 13 erfolgt dann später. Die Flanschwelle 8 ist mit der N1 Welle 10 über eine Presspassung verbunden. Vorzugsweise wird zum Lösen der Presspassung die koaxial innen liegende N1 Welle 10 gekühlt. Vorzugsweise kann zusätzlich die koaxial außen liegende Flanschwelle 8 erwärmt werden. Um die Flanschwelle 8 von der N1 Welle 10 in axialer Richtung zu trennen, wird eine Pressvorrichtung verwendet, die vorzugsweise durch eine Hydraulikpresse gebildet wird. Die Hydraulikpresse wird an einer ersten Seite, die im montierten Zustand in Richtung des Pfeils 41 zeigt, über ein Gewinde mit einem Innengewinde der N1 Welle 10 verschraubt und an der zweiten Seite mit einer Art Bajonettverschluss formschlüssig mit der Flanschwelle 8 verbunden. Die Hydraulikpresse übt bei Druckbeaufschlagung auf die N1 Welle 10 und auf die Flanschwelle 8 eine entgegengesetzt wirkende Axialkraft aus. Die Hydraulikpresse kann sich dabei an der N1 Welle 10 in axialer Richtung gegenüber einer Bewegung nach hinten abstützen. Dies führt dazu, dass die Flanschwelle 8 in axialer Richtung nach vorne aus dem Triebwerk bewegt wird, bis der Bereich der Presspassung überwunden ist. Wenn dieser Zustand erreicht ist, wird die Hydraulikpumpe vorzugsweise wieder demontiert.

Anschließend wird die Flanschwelle 8 vorzugsweise unter Zuhilfenahme einer Führungsvorrichtung 15 vollständig demontiert.

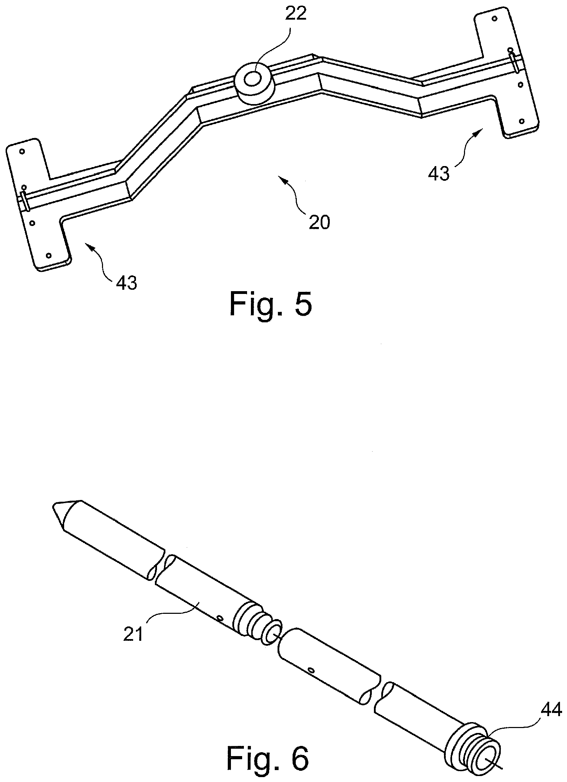

In den Fig. 4 bis Fig. 6 sind die Komponenten der Führungsvorrichtung 15 dargestellt. Die Führungsvorrichtung 15 umfasst ein Führungsrohr 21 (siehe Fig. 4 und Fig. 6), das im montierten Zustand über eine Zentralbohrung 22 in einer Haltevorrichtung 20 gestützt ist (siehe Fig. 5). Die Haltevorrichtung 20 wird vorzugsweise mit zwei Befestigungsabschnitten 43 mit dem Triebwerksgehäuse eines vorderen Triebwerksbereichs verbunden. Vorzugsweise werden die Befestigungsabschnitte 43 mit einem Bereich des Einlaufs verbunden. Bevorzugt wird die Verbindung zwischen dem Triebwerksgehäuse und den Befestigungsabschnitten 43 über eine Schraubverbindung hergestellt. Die Haltevorrichtung 20 ist vorzugsweise so geformt, dass der Bereich der Zentralbohrung 22 außerhalb der Ebene der Befestigungsabschnitte 43 liegt. Vorzugsweise liegt der Bereich der Zentralbohrung 22 in einem Abstand von 20 cm bis 40 cm außerhalb der Ebene der Befestigungsabschnitte 43, weiter vorzugsweise ca. 30 cm. Es wird damit erreicht, dass die Flanschwelle 8 problemlos aus dem Triebwerk gezogen werden kann, ohne dass die Bewegung durch die Haltevorrichtung behindert wird. Das Führungsrohr 21 hat einen Durchmesser, der kleiner ist als der Innendurchmesser der Flanschwelle 8. Der Durchmesser der Zentralbohrung 22 ist so bemessen, dass er mit dem Durchmesser des Führungsrohres 21 formkorrespondiert. An einem Ende des Führungsrohres 21 ist ein Gewinde 44 vorgesehen, das so ausgelegt ist, dass es mit dem Innengewinde der N1 Welle 10 verschraubt werden kann. Im montierten Zustand ist das Führungsrohr 21 somit an zwei axial auseinanderliegenden Punkten in radialer Richtung gelagert.

Gemäß dem Verfahren wird das Führungsrohr 21 durch die Flanschwelle 8 geführt und so das Ende des Führungsrohrs 21 mit dem Gewinde 44 von vorne in Richtung des Pfeils 41 bis zu dem vorderen Ende der N1 Welle 10 geschoben. Anschließend wird die Haltevorrichtung 20 so positioniert, dass das Führungsrohr 21 in der Zentralbohrung 22 der Haltevorrichtung 20 gelagert ist. In dieser Position wird die Haltevorrichtung 20 dann mit den Befestigungsabschnitten 43 an dem vorderen Bereich des Triebwerks befestigt. Sobald das Führungsrohr 21 mit der N1 Welle 10 in Kontakt ist, wird das Führungsrohr 21 entlang seiner Längsachse so in Rotation versetzt, so dass das Gewinde 44 in das Innengewinde der N1 Welle 10 eindrehen kann und so die N1 Welle 10 mit dem Führungsrohr 21 verbunden wird. Die Flanschwelle 8 umgibt das Führungsrohr 21 nun koaxial, wodurch die Flanschwelle 8 bei der Bewegung nach vorne aus dem Triebwerk in radialer Richtung gestützt wird. Durch die Stützwirkung des Führungsrohrs 21 können Beschädigungen an der Flanschwelle 8 während des Demontageverfahrens vermieden und eine einfache Handhabbarkeit gewährleistet werden. Das Führungsrohr 21 dient auch bei einem auf das Demontageverfahren folgende Montageverfahren zur vereinfachten Montage der Flanschwelle 8.

In einem vierten Schritt des Verfahrens wird vorzugsweise die erste Lagereinheit 6 und/oder die zweite Lagereinheit 7, je nachdem welche Instandhaltungsmaßnahmen durchgeführt werden sollen, demontiert. Bevorzugt wird das vorgeschlagene Demontageverfahren für den Austausch oder die Inspektion von wenigstens einem Sensorsystem 45 im Bereich der zweiten Lagereinheit 7 verwendet. Es wird hier als Beispiel für das Sensorsystem der Wechsel eines Geschwindigkeitsmessers, der sogenannte "Speed Probe", erläutert. Alternativ kann mit dem Verfahren z.B. auch der Positionsgeber zum Detektieren von Vibrationen, die sogenannte "Trim Balance Probe", oder das elektrische Kabel, das sogenannte "Fan Speed/Trim Balance Probes Harness", gewechselt werden.

Durch den Ausbau der Flanschwelle 8 erlangt man soweit Zugang zu einem vorderen Lagerbereich 5, dass ein Ein- bzw. Ausbau des Geschwindigkeitssensors problemlos möglich ist. Durch das Verfahren ist auch die Verkabelung des Geschwindigkeitssensors zugänglich, wodurch auch an der Verkabelung Instandhaltungsmaßnahmen durchgeführt werden können. Nach dem Einbau des Geschwindigkeitssensors muss dieser kalibriert werden. Hierzu ist es zunächst erforderlich, den Abstand zwischen dem Fühlerkopf und dem Taktgeber 33 zu ermitteln. Eine aus dem Stand der Technik bekannte Vorrichtung zur Kalibrierung des Geschwindigkeitssensors kann bei dem Demontageverfahren nicht verwendet werden, da hierzu die N1 Welle 10 ausgebaut werden müsste. Es wird daher eine modifizierte Kalibriervorrichtung 16 zur Kalibrierung des Geschwindigkeitssensors verwendet.

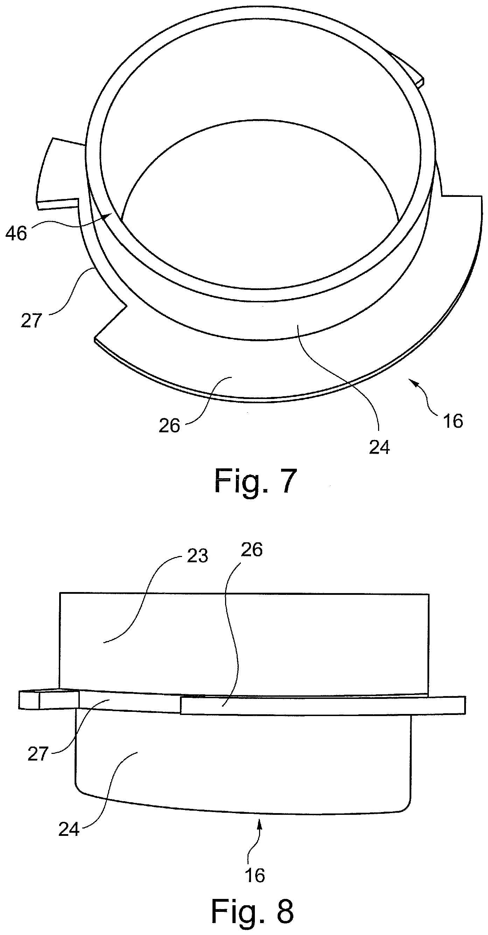

Die Kalibriervorrichtung 16 ist in den Fig. 7 und Fig. 8 in verschiedenen Perspektiven dargestellt und umfasst ein ringförmiges Grundelement 46. Der Innenradius der Kalibriervorrichtung 16 ist so bemessen, dass die Kalibriervorrichtung 16 über die N1 Welle 10 in eine Kalibrierposition bewegt werden kann. Die Kalibrierposition ist die Position, in der eine erste Außenfläche 23 der Kalibriervorrichtung 16 die Position der Außenfläche des eingebauten Taktgebers 33 einnimmt. Die Kalibriervorrichtung 16 weist einen Vorsprung 26 auf, der in der Kalibrierposition als Anlage an der zweiten Lagereinheit 7 dient. Es wird somit durch den Vorsprung 26 die Kalibrierposition in axialer Richtung festgelegt. In dem Vorsprung 26 sind vorzugsweise mindestens vier Aussparungen 27 vorgesehen, die dazu dienen, die Kalibriervorrichtung 16 in axialer Richtung an Hindernissen vorbei in die Kalibrierposition bewegen zu können. Eine zweite Außenfläche 24 ist dabei so ausgebildet, dass sie in der Kalibrierposition formkorrespondierend mit dem Innenradius der zweiten Lagereinheit 7 verbunden ist; die Kalibrierposition der Kalibriervorrichtung 16 ist somit eindeutig festgelegt.

Zur Durchführung des Verfahrens wird die Kalibriervorrichtung 16 über die N1 Welle 10 von vorne in die Kalibrierposition bewegt. Die Kalibrierposition ist erreicht, wenn der Vorsprung 26 an der nach vorne gerichteten Seitenfläche der zweiten Lagereinheit 7 anliegt; die zweite Außenfläche 24 greift dabei formkorrespondierend in die Innenfläche 25 der zweiten Lagereinheit 7. In dieser Position simuliert die erste Außenfläche 23 die Außenfläche des Taktgebers 33. Es kann nun der Abstand zwischen dem Sensorkopf und dem Taktgeber 33 gemessen werden und anschließend der Geschwindigkeitssensor auf den gemessenen Wert eingestellt werden. Die Kalibriervorrichtung 16 kann anschließend wieder entfernt werden.

Vorangehend wurde ausschließlich die Demontage des Triebwerks beschrieben. Die Montage des Triebwerks kann analog zu der Demontage in umgekehrter Reihenfolge erfolgen.

## Patentansprüche

1. Kalibriervorrichtung (16) zur Durchführung eines Demontageverfahrens für Gasturbinen (11) zum Austausch und/oder zur Inspektion und/oder zur Reparatur von in einem vorderen Lagerbereich (5) der Gasturbine (11) angeordneten Bauteilen, wobei
- die Gasturbine (11) zumindest ein Fanmodul (1), ein Gasturbinengehäuse, ein Niederdrucksystem und ein Hochdrucksystem umfasst, wobei
- das Niederdrucksystem einen Niederdruckverdichter (4), eine Niederdruckturbine (9), eine Verbindungswelle (13), eine Flanschwelle (8) und eine N1 Welle (10) umfasst, wobei
- die N1 Welle (10) über die Flanschwelle (8) und über die Verbindungwelle (1) mit dem Niederdruckverdichter (4) verbunden ist, wobei
- die Verbindungswelle (13) über eine erste Lagereinheit (6) in dem Gasturbinengehäuse gelagert ist, und
- die Flanschwelle (8) über eine zweite Lagereinheit (7) in dem Gasturbinengehäuse gelagert ist, wobei
- das Demontageverfahren mindestens die folgenden Schritte umfasst:
a) Demontage des Fanmoduls (1), und
b) Fixieren der N1 Welle (10) in axialer Richtung gegenüber dem Gasturbinengehäuse mit einer Fixiervorrichtung (14), und
c) Demontage der Flanschwelle (8) unter Zuhilfenahme einer Führungsvorrichtung (15), deren Ausrichtung gegenüber der Gasturbine (11) in wenigstens einer Raumrichtung durch eine Komponente der verbleibenden Gasturbine (11) festgelegt ist, wobei dies nach dem Fixieren der N1 Welle (10) und nach der Demontage des Fanmoduls (1) erfolgt, wobei
- in dem Verfahrensschritt c) die Flanschwelle (8) und der Niederdruckverdichter (4) demontiert werden, wobei
- im Verfahrensschritt c) zusätzlich die erste Lagereinheit (6) und die Verbindungswelle (13) demontiert werden, wobei dies nach der Demontage des Niederdruckverdichters erfolgt, wobei
- im Anschluss an die Verfahrensschritte a) bis c) ein weiterer Verfahrensschritt 1) zum Wechsel zumindest eines Teilsystems eines Sensorsystems (45) vorgesehen ist, wobei
- der Verfahrensschritt 1) zusätzlich die Kalibrierung des Sensorsystems (45) beinhaltet, wobei
- das Sensorsystem im Wesentlichen einen Sensor und einen Taktgeber (33) umfasst, wobei
- bei der Kalibrierung der Abstand zwischen einem Taktgeber (33) und einem Fühlerkopf unter Zuhilfenahme der Kalibriervorrichtung (16) gemessen wird, **dadurch gekennzeichnet, dass**
- die Kalibriervorrichtung (16) eine erste und zweite zylinderförmige Außenfläche (23, 24) aufweist, wobei
- die erste zylinderförmige Außenfläche (23) und die zweite zylinderförmige Außenfläche (24) konzentrisch zueinander angeordnet sind,
- ein Radius der ersten zylinderförmigen Außenfläche (23) dem Radius eines Taktgebers (33) des Sensorsystems entspricht, und
- die zweite zylinderförmige Außenfläche (24) formkorrespondierend zu einer Innenfläche (25) der zweiten Lagereinheit (7) ist.

2. Kalibriervorrichtung (16) nach Anspruch 1, **dadurch gekennzeichnet, dass**
- die Kalibriervorrichtung (16) wenigstens einen ringförmigen Vorsprung (26) aufweist, wobei
- an dem ringförmigen Vorsprung (26) wenigstens eine Aussparung (27) zum vereinfachten Bewegen der Kalibriervorrichtung (16) in eine/aus einer Kalibrierposition vorgesehen ist.

## Claims

1. Calibration device (16) for carrying out a disassembly method for gas turbines (11) for replacing and/or inspecting and/or repairing components arranged in a front bearing region (5) of the gas turbine (11), wherein
- the gas turbine (11) comprising at least one fan module (1), a gas turbine housing, a low-pressure system and a high-pressure system, wherein
- the low-pressure system comprising a low-pressure compressor (4), a low-pressure turbine (9), a connecting shaft (13), a flanged shaft (8) and a N1 shaft (10), wherein
- the N1 shaft (10) being connected to the low-pressure compressor (4) via the flanged shaft (8) and the connecting shaft (1), wherein
- the connecting shaft (13) being supported in the gas turbine housing via a first bearing unit (6), and
- the flanged shaft (8) being supported in the gas turbine housing via a second bearing unit (7), wherein
- the disassembly method comprises at least the steps of:
a) dismounting the fan module (1), and
b) fixing the N1 shaft (10) in an axial direction relative to the gas turbine housing using a fixing device (14), and
c) dismounting the flanged shaft (8) using a guide device (15), the orientation of which relative to the gas turbine (11) in at least one spatial direction is determined by a component of the remaining gas turbine (11), this taking place after the N1 shaft (10) has been fixed and after the fan module (1) has been dismounted, wherein
- in method step c), the flanged shaft (8) and the low-pressure compressor (4) are dismounted, wherein
- in method step c), the first bearing unit (6) and the connecting shaft (13) are also dismounted, this taking place after the low-pressure compressor has been dismounted, wherein
- following the method steps a) to c), an additional method step 1) is provided for replacing at least one sub-system of a sensor system (45), wherein
- the method step 1) also includes the calibration of the sensor system (45), wherein
- the sensor system substantially comprising a sensor and a clock generator (33), wherein
- the distance between a clock generator (33) and a sensor head being measured during calibration using the calibration device (16), **characterised in that**
- the calibration device (16) comprises a first and second cylinder-shaped outer face (23, 24), wherein
- the first cylinder-shaped outer face (23) and the second cylinder-shaped outer face (24) are arranged concentrically to each other,
- a radius of the first cylinder-shaped outer face (23) corresponds to the radius of a clock generator (33) of the sensor system, and
- the second cylinder-shaped outer face (24) corresponds in shape to an inner face (25) of the second bearing unit (7).

2. Calibration device (16) according to claim 1, **characterised in that**
- the calibration device (16) comprises at least one annular projection (26), wherein
- at least one gap (27) is provided in the annular projection (26) in order to make it easier to move the calibration device (16) into/out of a calibration position.

## Revendications

1. Dispositif d'étalonnage (16) destiné à exécuter un procédé de démontage de turbines à gaz (11) pour le remplacement et/ou l'inspection et/ou la réparation de composants disposés dans une zone de palier avant (5) de la turbine à gaz (11), dans lequel
- la turbine à gaz (11) comprend au moins un module de soufflante (1), un carter de turbine à gaz, un système basse pression et un système haute pression, dans lequel
- le système basse pression comprend un compresseur basse pression (4), une turbine basse pression (9), un arbre de liaison (13), un faux-arbre (8) et un arbre N1 (10), dans lequel
- l'arbre N1 (10) est relié au compresseur basse pression (4) par le faux-arbre (8) et par l'arbre de liaison (1), dans lequel
- l'arbre de liaison (13) est monté dans le carter de turbine à gaz au moyen d'une première unité de palier (6), et
- le faux-arbre (8) est monté dans le carter de turbine à gaz au moyen d'une deuxième unité de palier (7), dans lequel
- le procédé de démontage comprend au moins les étapes suivantes :
a) démontage du module de soufflante (1), et
b) fixation de l'arbre N1 (10) dans la direction axiale par rapport au carter de turbine à gaz à l'aide d'un dispositif de fixation (14), et
c) démontage du faux-arbre (8) à l'aide d'un dispositif de guidage (15) dont l'orientation par rapport à la turbine à gaz (11) dans au moins une direction spatiale est définie par un composant de la turbine à gaz (11) restante, ceci étant effectué après la fixation de l'arbre N1 (10) et après le démontage du module de soufflante (1), dans lequel
- à l'étape c), le faux-arbre (8) et le compresseur basse pression (4) sont démontés, dans lequel
- à l'étape c), la première unité de palier (6) et l'arbre de liaison (13) sont démontés en plus, ceci étant effectué après le démontage du compresseur basse pression, dans lequel
- après les étapes a) à c), une autre étape 1) est prévue pour remplacer au moins un sous-système d'un système de capteur (45), dans lequel
- l'étape 1) comprend en outre l'étalonnage du système de capteur (45), dans lequel
- le système de capteur comprend essentiellement un capteur et un générateur d'impulsions (33), dans lequel
- l'étalonnage consiste à mesurer la distance entre un générateur d'impulsions (33) et une tête de sonde à l'aide du dispositif d'étalonnage (16),
**caractérisé en ce que**
- le dispositif d'étalonnage (16) présente une première et une deuxième surface extérieure cylindrique (23, 24), dans lequel
- la première surface extérieure cylindrique (23) et la deuxième surface extérieure cylindrique (24) sont disposées concentriquement l'une à l'autre,
- un rayon de la première surface extérieure cylindrique (23) correspond au rayon d'un générateur d'impulsions (33) du système de capteur, et
- la deuxième surface extérieure cylindrique (24) correspond par la forme à une surface intérieure (25) de la deuxième unité de palier (7).

2. Dispositif d'étalonnage (16) selon la revendication 1, **caractérisé en ce que**
- le dispositif d'étalonnage (16) présente au moins une saillie annulaire (26), dans lequel
- au moins un évidement (27) est prévu sur la saillie annulaire (26) pour faciliter le déplacement du dispositif d'étalonnage (16) dans/hors une position d'étalonnage.
